# EUROPÄISCHE PATENTSCHRIFT

(11) **EP 0 740 508 B1**
(45) Veröffentlichungstag und Bekanntmachung des Hinweises auf die Patenterteilung: **24.09.1997**
(21) Anmeldenummer: 95907580.5
(22) Anmeldetag: 21.01.1995
(51) Int. Cl.: A21C 3/06

(54) **VORRICHTUNG ZUM AUFWICKELN EINES TEIGBANDES**
EQUIPMENT FOR ROLLING UP A STRIP OF DOUGH
DISPOSITIF POUR ENROULER UNE BANDE DE PATE

(30) Priorität: 27.01.1994 DE 4402346
(43) Veröffentlichungstag der Anmeldung: 06.11.1996
(73) Patentinhaber: A. FRITSCH GMBH & CO. KG, D-97348 Markt Einersheim (DE)
(72) Erfinder: BEIER, Siegbert, D-97318 Kitzingen (DE); TROST, Ernst, D-97348 Markt Einersheim (DE)
(74) Vertreter: Götz, Georg, Dipl.-Ing.
(86) Internationale Anmeldenummer: EP9500223
(87) Internationale Veröffentlichungsnummer: WO9520322

(56) Entgegenhaltungen:
- EP-A- 0 036 088
- EP-A- 0 213 088
- EP-A- 0 238 682
- EP-A- 0 303 567
- EP-A- 0 439 730

## Beschreibung

Die Erfindung betrifft eine Vorrichtung zum Aufwickeln eines Teigbandes, die eine Fördereinrichtung aufweist, die das Teigband zu einer dieses erfassenden Einrolleinrichtung bewegt gemäß Oberbegriff des Anspruchs 1.

Es ist bekannt (EP 0 204 490 B1), Teigstücke zwischen zwei vertikal gegenüberliegenden Endlos-Riemeneinrichtungen zu bewegen. Die Endlos-Riemeneinrichtungen laufen in entgegengesetzte Richtungen, wobei der Riemen der unteren Einrichtung vorwärts und schneller als der Riemen der oberen Einrichtung angetrieben wird. Da sich der Durchmesser des Teigstückes mit zunehmenden Aufrollen ständig vergrößert, ist eine Zusatz-Vorrichtung vorzusehen mit der ein sich entsprechend vergrößernder Spalt zwischen den beiden Endlos-Riemeneinrichtungen insbesondere durch Heben und Senken des stromaufwärtigen Endes der oberen Einrichtung ermöglicht ist. Außerdem ist noch die Anordnung eines Paares von vertikal gegenüberliegenden Rollen zusätzlich ins Auge zu fassen damit ein Teigband präzise in den Spalt zwischen den beiden Riemeneinrichtungen geführt werden kann.

Es ist ein gattungsgemäßes Verfahren zum Rollen von Teig bekannt (EP-A-0 238 682), bei dem das teilweise gefaltete Teigmaterial von der Vorderkante eines Förderbandes in einen kreisartigen Hohlraum gebracht wird, der durch wenigstens vier Rollen umgeben ist. Deren Achsen verlaufen zueinander parallel und quer zur Förderrichtung. Alle Rollen rotieren in gleicher Richtung mit einer solchen Geschwindigkeit, daß das Teigmaterial eingerollt wird. Zur Freigabe des eingerollten Teiges aus dem Hohlraum dienen Pneumatikzylinder, mittels derer die Lagerschilde für die Rollen so verstellt werden, daß der eingerollte Teigling auf ein weiteres Förderband fallen kann.

Bei einer bekannten Maschine (EP-A-0 213 088) zum Ineinanderwickeln von gerollten Teig entsprechend den im Oberbegriff des Anspruchs 1 genannten Merkmalen werden dazu drei angetriebene Rollen verwendet, welche dem Teig eine Aufrollverformung entgegen der Richtung des heranführenden Förderbandes einprägen. Wie bei dem zuvor genannten, bekannten Verfahren erfolgt auch hier der Antrieb der um das Förderbandende herumgruppierten Rollen über Treibriemen oder Kettenräder. Die Rollen sind ebenfalls zur Bildung eines gemeinsamen Formhohlraums angeordnet, worin der Teigling hohlartig sich aufrollen kann. Sensoren detektieren, ob dieser Vorgang vollendet ist, und gegebenenfalls wird das Ende des Förderbandes so verstellt, daß die Teigspule abtransportiert werden kann.

Wird bei den gemäß bekanntem Verfahren bzw. bekannter Maschine angeordneten Einrollwalzen deren Abstand voneinander zu groß, kann Teigmasse zwischen diesen hindurchgelangen, und weitere Maschinenteile verschmutzen. Diese Gefahr ist vor allem bei noch verfestigter Teigmasse und/oder großen Einroll-Durchmessern, die große Abstände der Walzen bedingen, gegeben. Also wird mit der Erfindung, wie sie im Anspruch 1 definiert ist, zum einen die Aufgabe gelöst, mit einer gattungsgemäßen Vorrichtung Teigerzeugnisse mit möglichst großem Einroll-Durchmesser herstellen zu können. Denn die drei oder mehr Einrollwalzen sind erfindungsgemäß von mehreren gemeinsamen Teighalteriemen umgeben, welche verhindern können, daß Teigmasse oder Teigband in die Zwischenräume bzw. Spalte zwischen den Einrollwalzen einlaufen kann. Nach der Erfindung sind die Teighalteriemen, die beispielsweise zwei Einrollwalzen bzw. einem Einrollwalzenpaar gemeinsam sind, axial versetzt bzw. distanziert angeordnet. In die dabei entstehenden Lücken sind jeweils weitere Teighalteriemen nächster Walzenpaare eingelegt, die mit dem vorherigen erstgenannten Walzenpaar die genannte Einrollwalze gemeinsam aufweisen. Durch die so versetzt ineinandergreifenden, 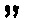 Lücke auf Lücke" angeordneten Teighalteriemen lassen sich zweckmäßig je zwei aufeinanderfolgende Rollen miteinander verbinden. Zum anderen läßt sich durch die Idee der Teighalteriemen neben, wie bereits genannt, großen Einroll-Durchmessern die weitere Aufgabe lösen, die Walzen in ihrem eigenen Durchmesser kleinhalten zu können.

Die Sicherheit und Zuverlässigkeit des Wickelbetriebs wird erhöht, weg nach einer besonderen Ausbildung der Erfindung die Einrollwalzen gegenüber der Fördereinrichtung in unterschiedlichen Höhen angeordnet sind, und insbesondere die unterste Einrollwalze so angeordnet ist, daß ein von der Fördereinrichtung gelangendes Teigband auf die unterste Einrollwalze gelangt und mit seiner Spitze nach oben gestoßen und, gegebenenfalls unter Mitwirkung der weiteren Einrollwalze, nach innen umgeschlagen wird.

Um ein sicheres Umfassen und Aufnehmen des sich einrollenden Teigbandes zu gewährleisten, ist es anzustreben, durch die Wien gleichsam eine möglichst große Aufnahmeecke zu bilden. Hierzu wird nach einer Ausbildung der Erfindung vorgeschlagen, wenigstens drei Einrollwalzen vorzusehen, die im Querschnitt und/oder in der gemeinsamen Stirnansicht gesehen die Ecken eines Dreiecks mit unterschiedlichen langen Schenkein bilden, wobei der längste Schenkel dem Fördereinrichtungs-Ausgangsbereicb gegenüber und/oder am nächsten liegt. Damit wird die vorteilhafte Wirkung erzielt, daß das an seinen Seiten offene Dreieck mit seinem größten bzw. stumpfen Winkel dem Ausgangsbereich der Fördereinrichtung gegenüber liegt, wodurch ein ausreichend großer Aufnahmebereich für das Teigband in der Einrolleinrichtung bzw. Einrollwalzen-Gruppe geschaffen ist. Mit besonderem Vorteil beträgt der vom Dreieck gebildete größte Winkel 90°.

Um die bei der oben genannten, erfindungsgemäßen Verfahrensweise angestrebten Wickel- und Auswurfstellungen konstruktiv zweckmäßig herbeiführen zu können, wird nach einer Ausbildung der Erfindung vorgeschlagen, daß für die Einrollwalzen ein gemeinsamer Verstellsupport vorgesehen wird, in dem diese drehbar befestigt sind; der Verstellsupport seinerseits ist mit einem Stellantrieb gekoppelt und relativ zur Fördereinrichtung derart positionierbar, daß für die Einrollwalzen eine zur Fördereinrichtung nähere Wickelstellung und eine dazu entferntere Auswurfstellung gegeben ist. Zur Realisierung des Stellantriebs eignen sich ein oder mehrere exzentrisch rotierende Drehorgane, die jeweils über eine angelenkte Hubstange am Verstellsupport oder einem seiner Teile angreifen. Eine einfache und vor allem platzsparende Lagerung des Verstellsupports besteht darin, diesen oder Teile davon am Grundchassis der Wickelvorrichtung schwenkbar anzulenken.

In der praktischen Anwendung erhebt sich das Erfordernis, unterschiedlich beschaffene Teigbänder (unterschiedliche Dicken, mit oder ohne Füllung auf ihrer Oberfläche) bearbeiten zu können. Um in dieser Hinsicht die Anwendungflexibilität zu erhöhen, ist nach einer Ausbildung der Erfindung der Verstellsupport wenigstens mit zwei voneinander separat verstellbaren Lagermitteln versehen, denen unterschiedliche Einrollwalzen und je ein separat betätigbares Antriebsorgan des Stellantriebs zugeordnet sind. Hierdurch läßt sich insbesondere der Vorteil erzielen, daß die Abstände der Einrollwalzen zueinander durch Verschiebung bzw. Positionierung der entsprechenden Lagermittel eingestellt werden kann.

Weitere Einzelheiten, Merkmale und Vorteile auf der Basis der Erfindung ergeben sich aus den Unteransprüchen und der nachfolgenden Beschreibung bevorzugter Ausführungswege der Erfindung sowie aus den Zeichnungen. Diese zeigen in:
- Fig. 1: in perspektivischer Ansicht ein Beispiel für eine erfindungsgemäße Vorrichtung,
- Fig. 2: eine schematische Seitenansicht dieser Vorrichtung,
- Fig. 3: eine schematische, Fig. 2 entsprechende Ansicht der Vorrichtung in Wickelstellung,
- Fig. 4: eine entsprechende Ansicht der Vorrichtung in Auswurfstellung,
- Fig. 5: eine schematische Seitenansicht dieser Vorrichtung mit verändertem Walzenabständen,
- Fig. 6: in Seitenansicht ein weiteres Ausführungsbeispiel in Wickelstellung,
- Fig. 7: die Vorrichtung gemäß Fig. 6 in Auswurfstellung,
- Fig. 8: in schematischer Seitenansicht ein weiteres Ausführungsbeispiel mit Teighalteriemen,
- Fig. 9: in entsprechender Darstellung ein weiteres Ausführungsbeispiel mit Teighalteriemen, und
- Fig. 10: das Ausführungsprinzip mit Teighalteriemen gemäß Fig. 9 in perspektivischer und detaillierterer Darstellung.

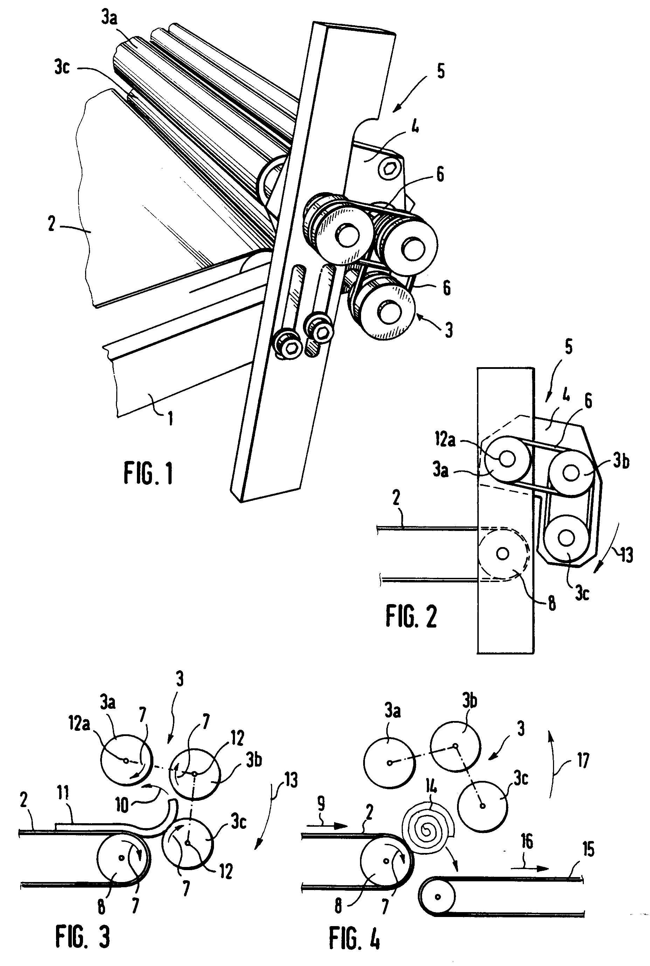

Gemäß Fig. 1 sind am Grundchassis 1 der Vorrichtung zum Aufwickeln eines Teigbandes ein Förderband 2 und eine dieser unmittelbar nachfolgende Einrolleinrichtung 3 angebracht. Diese weist drei Einrollwalzen 3a, 3b und 3c (vgl. auch Fig. 2 - 4) auf, die in Lagerschilden 4 eines gemeinsamen Verstellsupports 5 drehbar fixiert sind. Alle Einrollwalzen 3a, 3b, 3c sind an ihren Enden an der Außenseite des Verstellsupports 5 über einen Mehrfach-Riementrieb 6 jeweils im gleichen Richtungs- bzw. Drehsinn 7 entsprechend dem Uhrzeigersinn angetrieben. Der Antrieb kann beispielsweise über Gleichstrommotoren erfolgen, die nicht gezeichnet sind. Im gleichen Drehsinn 7 ist ebenfalls die Antriebswalze 8 im Ausgangsbereich des Förderbandes 2 angetrieben, so daß die daraus resultierende Förderrichtung (vgl. Fig. 4) der Transportbewegung 10 entspricht, die dem Teigband 11, insbesondere dessen vorderen Ende, durch die Einrollwalzen 3a, 3b, 3c erteilt wird.

Die Einrollwalzen 3a, 3b, 3c sind gegenüber dem Förderband 2 in unterschiedlichen Höhen angeordnet. Dabei bilden deren Drehachsen 12 die Ecken eines Dreiecks mit einem Winkel etwas größer als 90°. Der sich dabei ergebende, längste Dreiecksschenkel liegt dem Ausgangsbereich bzw. der Ausgangs-Antriebswalze 8 des Förderbandes 2 unmittelbar gegenüber, so daß das Teigband mit seinem vorderen Ende entsprechend der Transportbewegung 10 in der Ecke des Dreiecks Aufnahmeraum finden kann, die von dem Winkel größer als 90° gebildet ist.

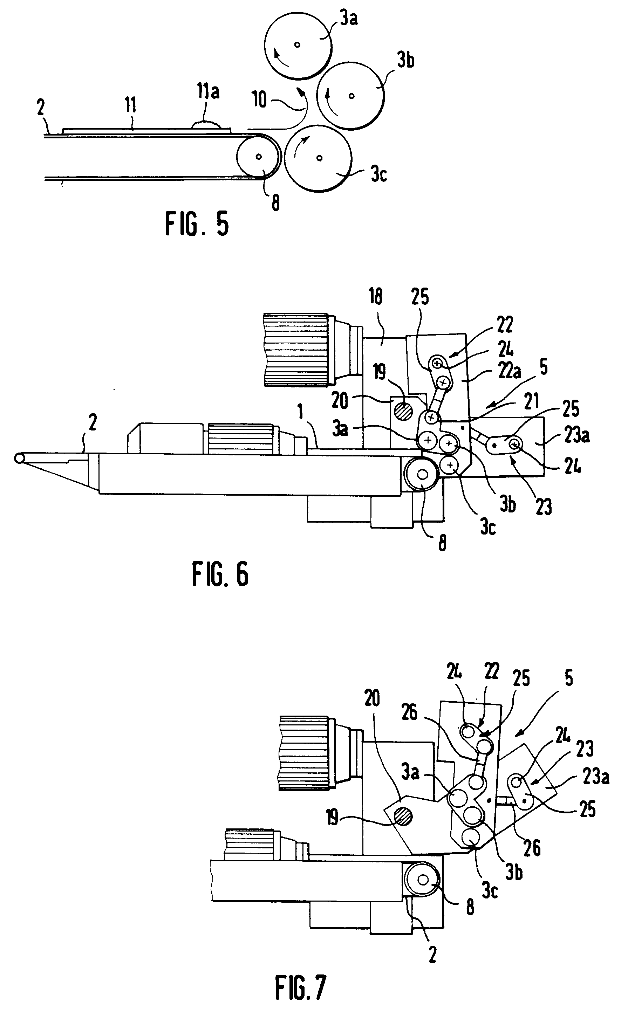

Im Ausführungsbeispiel gemäß Fig. 1 - 4 bildet die Drehachse 12a der Einrollwalze 3a, die in der Wickelstellung gemäß Fig. 1 - 3 am höchsten liegt, eine Schwenkachse für den Lagerschild 4 mit den beiden weiteren Einrollwalzen 3b, 3c. In der Wickelstellung ist der Lagerschild 4 um die Dreh- und Schwenkachse 12a entsprechend der Abwärts-Schwenkbewegung 13 gemäß Fig. 2 oder 3 nach unten geschwenkt. In dieser Stellung wird ein Teigband 11 auf dem Förderband 2 mit seiner Spitze von der untersten Einrollwalze 3c nach oben gestoßen, so daß die Transportbewegung 10 entsteht. Diese wird durch die weiteren Einrollwalzen 3b, 3a nach und nach vervollständigt, bis das in Fig. 4 angedeutete, fertig eingerollte Teigerzeugnis 14 mit der gewünschten Ringelform erreicht worden ist. Damit dieses wegtransportiert werden kann, ist ein gegenüber dem ersten Förderband 2 tiefer gelegenes, zweites Förderband 15 angeordnet. Um das Teigerzeugnis aus der Umfassung bzw. Umklammerung, die durch die entsprechend einer Dreiecksform gruppierten Einrollwalzen 3a - 3c bewirkt wird, zu lösen, wird der Lagerschild 4 entsprechend einer Aufwärts-Schwerkbewegung 17 von einem (nicht gezeigten) Stellantrieb nach oben bewegt. Dabei entfernt sich die in der Wickelstellung unterste Einrollwalze 3c soweit von der Förderband-Antriebswalze 8, daß das eingerollte Teigerzeugnis 14 vom sich weiterdrehenden Förderband 2 auf das nachfolgende, zweite Förderband 15 herunterfallen und von diesem wegtransportiert werden kann. Gemäß Fig. 5 ist es wünschenswert, Teigbänder 11 einzurollen, die im Bereich ihres vorderen Endes mit einer Füllung 11a auf der Oberfläche versehen sind. Solchenfalls ist es zweckmäßig, die drei Einrollwalzen 3a - 3c im engeren Abstand zueinander als nach Fig. 1 - 4 gezeigt anzuordnen.

Gemäß Fig. 6 und 7 ist der Verstellsupport 5 mit einem Grundschild 18 realisiert, das gegenüber dem Grundchassis 1 der Vorrichtung stationär angeordnet ist. An diesem Grundschild 18 ist über eine Vorgelegewelle 19 ein Schwenkschild 20 schwenkbar angelenkt. Dieses ist mit einem Lagerschild 21 für die beiden oberen Einrollwalzen 3a, 3b verbunden und dagegen verschwenkbar. Ferner wirken zwei Exzenterantriebe 22, 23, die jeweils eine Exzenterwelle 24, ein Exzenterelement 25 und eine damit gekoppelte Stange 26 aufweisen, auf die Einrollwalzen 3a - 3c zu deren Positionierung und/oder Verstellung ein (vgl. Wickelstellung in Fig. 6 mit Auswurfstellung in Fig. 7). Die Stange 26 des oberen Exzenterantriebs 22 greift am Lagerschild 21 an, das seinerseits am Schwenkschild 20 angelenkt ist. Die Exzenterwelle 24 des oberen Exzenterautriebs 22 ist in einem oberen Antriebshalter 22a angeordnet. Entsprechend ist der untere Exzenterantrieb 23 in einem unteren Antriebshalter 23a positioniert. Beide Antriebshalter 22a, 23a weisen im gezeichneten Beispiel Plattenform auf. Die Stange 26 des unteren Exzenterantriebs 23 greift am oberen Antriebshalter 22a an bzw. ist dort angelenkt. Sowohl die oberen und unteren Antriebshalter 22a, 23a als auch der Lagerschild 21 sind relativ zum Grundschild 18 verschwenkbar gelagert.

In der Wickelstellung gemäß Fig. 6 umgrenzen die Einrollwalzen 3a - 3c das Förderband 2 mit seiner Ausgangs-Antriebswalze 8, so daß in dem abgegrenzten Zwischenraum ein Teigerzeugnis gewickelt bzw. eingerollt werden kann. In der Auswurfstellung gemäß Fig. 7 sind die Exzenterantriebe 22, 23 so betätigt, daß alle Einrollwalzen 3a, 3b, 3c gleichzeitig vom Ausgangsbereich des Förderbandes eine erheblich größere Entfernung aufweisen als in Wickelstellung. Dies ist durch Verschwenken des Schwenkschildes 20 und des unteren Antriebshalters 23a nach oben erreicht, wobei gleichzeitig der obere Antriebshalter 22a mit dem Lagerschild 21 näherungsweise linear nach oben bewegt sind.

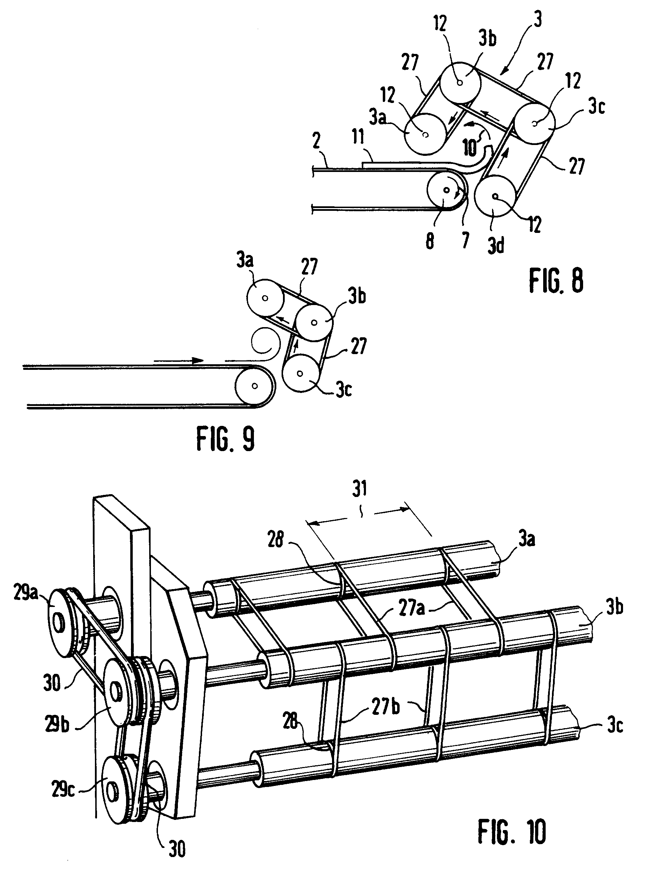

Gemäß Fig. 8 ist die Einrolleinrichtung 3 mit vier Einrollwalzen 3a, 3b, 3c, 3d realisiert, die um den Ausgangsbereich des Förderbandes 8 herum zu dessen Abgrenzung gruppiert sind. Die Anordnung der Einrollwalzen 3a - 3d ist dergestalt, daß deren Drehachsen 12 die Ecken eines teils rechteckigen, teils schiefwinkligen Vierecks bilden. Die längste Seite dieses Vierecks liegt dabei dem Ausgangsbereich bzw. der Ausgangswalze 8 des Förderbandes 2 am nächsten, damit das Teigband 11 möglichst sicher innerhalb dieses Vierecks aufgenommen werden kann. Eine weitere Besonderheit dieses Ausführungsbeispiels besteht darin, daß in Richtung der Transportbewegung 10 der Einrolleinrichtung 3 je zwei aufeinanderfolgende Einrollwalzen 3a und 3b, 3b und 3c bzw. 3c und 3d durch vorzugsweise mehrere gemeinsame Teighalteriemen 27 miteinander verbunden sind. Bei vier Einrollwalzen 3a - 3d sind hiernach drei gemeinsame Gruppen von Teighalteriemen 27 jeweils zwischen diesen Walzen, bei drei Einrollwalzen 3a, 3b, 3c sind zwei gemeinsame Gruppen von Teighalteriemen 27 zwischen den jeweils benachbarten Einrollwalzen 3a und 3b bzw. 3b und 3c (vgl. Fig. 9) notwendig.

Gemäß Fig. 10 können bei der Ausführung mit Teighalteriemen 27 die Einrollwalzen mit außerordentlich kleinem Durchmesser bzw. relativ großem Abstand voneinander ausgeführt sein, weil die Teighalteriemen weitgehend verhindern, daß Teig durch die Zwischenräume zwischen den Einrollwalzen 3a - 3c gelangen kann. Gemäß Fig. 10 ist jeder der Einrollwalzen 3a - 3c mit der nächstliegenden durch wenigstens drei gemeinsame Teighalteriemen 27a, 27b verbunden, die axial versetz: angeordnet in die Einrollwalze jeweils ringartig umlaufenden Nuten 28 geführt sind. Die mittlere Einrollwalze 3b ist mit den beiden benachbarten Einrollwalzen 3a bzw. 3c über je eine entsprechende Gruppe von Teighalteriemen 27a bzw. 27b verbunden, die entweder die oberste Einrollwalze 3a oder die unterste Einrollwalze 3c mit umfassen. Aufgrund des axialen Abstandes 31 zwischen den Teighalteriemen ist es möglich, die jeweiligen Gruppen a, b von Teighalteriemen 27a, 27b des ersten Einrollwalzenpaares 3a, 3b und des zweiten Einrollwalzenpaares 3b, 3c zueinander "Lücke auf Lücke" anzuordnen: Zwischen den oberen Teighalteriemen 27a, die das obere Einrollwalzenpaar 3a, 3b gemeinsam umfassen, verlaufen die unteren Teighalteriemen 27b, welche die mittlere Einrollwalze 3b und die untere Einrollwalze 3c gemeinsam umgeben.

Gemäß Fig. 1 oder 10 kann jeder Einrollwalze eine Antriebsscheibe 29a, 29b, 29c zugeordnet sein. Diese können im Rahmen eines Zweifach-Riementriebs durch jeweilige Antriebsriemen 30 gekoppelt sein, wobei dann die mittlere Antriebsscheibe 29b als Doppelriemenscheibe ausgeführt ist, welche von je einem der beiden Antriebsriemen 30 axial versetzt umlaufen ist (analog der mittleren Einrollwalze 3b bzw. deren zwei Gruppen a, b von Teighalteriemen 27a, 27b).

## Patentansprüche

1. Vorrichtung zum Aufwickeln eines Teigbandes (11), mit einer das Teigband (11) transportierenden Fördereinrichtung, insbesondere Förderband (2), an deren Ausgang eine das Teigband (11) erfassende Einrolleinrichtung (3) angeordnet ist, die mit drei oder mehr den Ausgangsbereich der Fördereinrichtung umgrenzend gruppierten Einrollwalzen (3a, 3b, 3c, 3d) realisiert ist, welche in einem gemeinsamen Drehsinn (7) angetrieben sind, der der Transport- bzw. Bewegungsrichtung (9,10) der Fördereinrichtung entspricht, insbesondere gleichgerichtet ist, **dadurch gekennzeichnet, daß** wenigstens je zwei einander nächstliegende oder benachbarte Einrollwalzen (3a,3b; 3b,3c; 3c,3d) von mehreren Teighalteriemen (27a; 27b) gemeinsam umfaßt sind, die axial im Abstand (31) zueinander angeordnet sind, wobei auf einer (3b) der Einrollwalzen (3a, 3b, 3c, 3d) eines Walzenpaares (3a,3b) in der Lücke (31) zwischen zwei Teighalteriemen (27a) ein weiterer Teighalteriemen (27b) eines anderen Walzenpaares (3b,3c) verläuft, das mit dem erstgenannten Walzenpaar (3a,3b) die selbe genannte Einrollwalze (3b) gemeinsam hat.

2. Vorrichtung nach Anspruch 1, dadurch gekennzeichnet, daß die Einrollwalzen (3a, 3b, 3c, 3d) gegenüber der Fördereinrichtung in unterschiedlichen Höhen angeordnet sind.

3. Vorrichtung nach Anspruch 2, gekennzeichnet durch eine Anordnung der untersten Einrollwalze (3c, 3d) gegenüber dem Fördereinrichtungs-Ausgangsbereich derart, daß ein von der Fördereinrichtung gelangendes Teigband (11) mit seinem vorderen Ende nach oben gestoßen (10) und/oder umgeschlagen (10) wird.

4. Vorrichtung nach Anspruch 3, dadurch gekennzeichnet, daß die unterste Einrollwalze (3c, 3d) zumindest teilweise innerhalb zweier paralleler Geraden angeordnet ist, die den Außendurchmesser der Fördereinrichtung und/oder die Ausgangsrolle (8) eines etwaigen Förderbandes (2) begrenzen.

5. Vorrichtung nach einem der vorangehenden Ansprüche, gekennzeichnet durch wenigstens drei Einrollwalzen (3a, 3b, 3c), die im Querschnitt und/oder in der gemeinsamen Stirnansicht gesehen die Ecken eines Dreiecks mit unterschiedlich langen Schenkeln bilden, wobei der längste Schenkel dem Fördereinrichtungs-Ausgangsbereich gegenüber und/oder am nächsten liegt (Fig.3, Fig.4).

6. Vorrichtung nach Anspruch 5, dadurch gekennzeichnet, daß das Dreieck rechtwinklig und/oder gleichschenklig ist.

7. Vorrichtung nach einem der vorangehenden Ansprüche, dadurch gekennzeichnet, daß die Einrollwalzen (3a, 3b, 3c, 3d) in einem gemeinsamen Verstellsupport (5) drehbar befestigt sind, welcher mit wenigstens einem Stellantrieb gekoppelt und zumindest teilweise relativ zur Fördereinrichtung derart verstellbar (13, 17) gelagert ist, daß für die Einrollwalzen (3a, 3b, 3c, 3d) eine zur Fördereinrichtung nähere Wickelstellung (Fig. 3) und eine dazu entferntere Auswurfstellung (Fig.4) gegeben ist.

8. Vorrichtung nach Anspruch 7, dadurch gekennzeichnet, daß der Stellantrieb ein oder mehrere exzenterartige Antriebsorgane (22, 23) aufweist, die jeweils über eine angekoppelte Stange (26) am Verstellsupport (5) oder einem seiner Teile (21, 22a) angreifen.

9. Vorrichtung nach Anspruch 7 oder 8, dadurch gekennzeichnet, daß der Verstellsupport (5) ganz oder teilweise (20, 21, 22a, 23a) am Vorrichtungs-Grundchassis (1) schwenkbar angelenkt ist.

10. Vorrichtung nach Anspruch 9 und 2, gekennzeichnet durch eine Anlenkung des Verstellsupports (5) um die Längsachse (12a) eines der oberen Einrollwalzen (3a) derart, daß die unterste Einrollwalze (3c) in eine zur Fördereinrichtung nähere Wickelstellung (Fig.3) und eine entferntere Auswurfstellung (Fig.4) verstellbar ist.

11. Vorrichtung nach einem der Ansprüche 7 bis 10, dadurch gekennzeichnet, daß der Verstellsupport (5) wenigstens zwei voneinander separat verstellbare Lagermittel (21, 23a) aufweist, denen unterschiedliche Einrollwalzen (3a,3b; 3c) und je ein separat betätigbares Antriebsorgan (22; 23) des Stellantriebs zugeordnet sind.

12. Vorrichtung nach einem der vorangehenden Ansprüche, gekennzeichnet durch eine oder mehrere ringartige Führungsvertiefungen (28) im Außenmantel der Einrollwalze (3a, 3b, 3c, 3d).

## Claims

1. A device for rolling up a strip of dough (11), with a conveying device transporting the strip of dough (11), more particularly a conveyor belt (2), at whose outlet is arranged a rolling device (3) which grasps the strip of dough (11) and is constructed with three or more rollers (3a, 3b, 3c, 3d), which are grouped so as to define the outlet region of the conveying device, are driven in a common direction of rotation (7) which corresponds to or more particularly is in the same direction as the conveying direction or direction of movement (9, 10) of the conveying device, characterised in that at least two rollers (3a, 3b; 3b, 3c; 3c, 3d) which are closest to or adjacent one another are together enclosed in each case by a plurality of dough holding belts (27a; 27b), which are arranged at an axial distance (31) from one another, a further dough holding belt (27b) of a second roller pair (3b, 3c) extending in the gap (31) between two dough holding belts (27a) on one (3b) of the rollers (3a, 3b, 3c, 3d) of a first roller pair (3a, 3b), the second roller pair (3b, 3c) sharing the same roller (3b) with the first roller pair (3a, 3b).

2. A device according to claim 1, characterised in that the rollers (3a, 3b, 3c, 3d) are arranged at different heights relative to the conveying device.

3. A device according to claim 2, characterised by an arrangement of the lowermost roller (3c, 3d) relative to the conveying device outlet region such that a strip of dough (11) supplied by the conveying device is pushed with its front end upwards (10) and/or is folded back (10).

4. A device according to claim 3, characterised in that the lowermost roller (3c, 3d) is arranged at least partially within two parallel straight lines, which define the outer diameter of the conveying device and/or the outlet roller (8) of a possible conveyor belt (2).

5. A device according to one of the preceding claims, characterised by at least three rollers (3a, 3b, 3c, 3d), which, viewed in cross section and/or in the common side view, form the corners of a triangle having sides of different length, the longest side lying opposite and/or closest to the conveying device outlet region (Fig. 3, Fig. 4).

6. A device according to claim 5, characterised in that the triangle is right-angled and/or equilateral.

7. A device according to one of the preceding claims, characterised in that the rollers (3a, 3b, 3c, 3d) are rotatably secured in a common adjustment support (5), which is coupled to at least one adjustment drive and is mounted so as to be at least partially adjustable (13, 17) relative to the conveying device, so that a winding position (Fig. 3) close to the conveying device and an ejection position (Fig. 4) remote therefrom is provided for the rollers (3a, 3b, 3c, 3d).

8. A device according to claim 7, characterised in that the adjustment drive comprises one or more eccentric-like drive members (22, 23), which each act via a coupled rod (26) upon the adjustment support (5) or one of the parts (21, 22a) thereof.

9. A device according to claim 7 or 8, characterised in that the adjustment support (5) is entirely or partially (20, 21, 22a, 23a) pivotably hinged to the device chassis (1).

10. A device according to claims 9 and 2, characterised by an articulation of the adjustment support (5) about the longitudinal axis (12a) of one of the upper rollers (3a) such that the lowermost roller (3c) can be adjusted into a winding position (Fig. 3) close to the conveying device and a remote ejection position (Fig. 4).

11. A device according to one of claims 7 to 10, characterised in that the adjustment support (5) comprises at least two mounting means (21, 23a), which are adjustable separately from one another and with which different rollers (3a, 3b; 3c) and an independently operable drive member (22; 23) of the adjustment drive are associated in each case.

12. A device according to one of the preceding claims, characterised by one or more ring-like guide recesses (28) in the outer cylindrical surface of the roller (3a, 3b, 3c, 3d).

## Revendications

1. Dispositif pour enrouler une bande de pâte (11), comportant un dispositif transporteur qui transporte la bande de pâte (11), notamment une bande transporteuse (2), à la sortie duquel est disposé un dispositif d'enroulement (3) qui saisit la bande de pâte (11) et qui est réalisé avec trois cylindres d'enroulement (3a,3b,3c,3d) ou plus, qui sont regroupés de manière à entourer la zone de sortie du dispositif transporteur et qui sont entraînés dans un sens de rotation commun (7) qui correspond à la direction de transport ou de déplacement (9,10) du dispositif transporteur, caractérisé en ce que sur au moins deux cylindres d'enroulement (3a,3b; 3b,3c; 3c,3d) respectivement placés l'un à la suite de l'autre ou voisins, circulent en commun plusieurs courroies (27a;27b) de retenue de la pâte, qui sont disposées à une certaine distance axiale (31) l'une de l'autre, et sur l'un (3b) des cylindres d'enroulement (3a,3b,3c,3d) d'une paire de cylindres (3a,3b) s'étend, dans l'espace (31) présent entre deux courroies (27a) de retenue de la pâte, une autre courroie (27b) de retenue de la pâte d'une autre paire de cylindres (3b,3c), qui possède, en commun avec la première paire citée de cylindres (3a,3b), le même cylindre d'enroulement indiqué (3b).

2. Dispositif selon la revendication 1, caractérisé en ce que les cylindres d'enroulement (3a,3b,3c,3d) sont disposés à des hauteurs différentes par rapport au dispositif transporteur.

3. Dispositif selon la revendication 2, caractérisé par une disposition du cylindre d'enroulement le plus bas (3c,3d) en vis-à-vis de la zone de sortie du dispositif transporteur, de telle sorte qu'une bande de pâte (11), qui arrive du dispositif transporteur, soit repoussée vers le haut (10) et/ou retournée (10), au niveau de son extrémité avant.

4. Dispositif selon la revendication 3, caractérisé en ce que le cylindre d'enroulement le plus bas (3c,3d) est disposé, au moins en partie, entre deux droites parallèles, qui délimitent le diamètre extérieur du dispositif transporteur et/ou le rouleau de sortie (8) d'une éventuelle bande transporteuse (2).

5. Dispositif selon l'une des revendications précédentes, caractérisé par au moins trois cylindres d'enroulement (3a,3b,3c), qui forment en coupe transversale et/ou selon une vue de face commune, les sommets d'un triangle ayant des côtés de longueurs inégales, le côté le plus long étant situé en vis-à-vis de la zone de sortie du dispositif transporteur et/ou en étant le plus proche (figure 3, figure 4).

6. Dispositif selon la revendication 5, caractérisé en ce que le triangle est un triangle rectangle et/ou un triangle isocèle.

7. Dispositif selon l'une des revendications précédentes, caractérisé en ce que les cylindres d'enroulement (3a,3b,3c,3d) sont fixés, de manière à pouvoir tourner, dans un support de réglage commun (5), qui est accouplé à au moins un dispositif de commande de réglage et est monté déplaçable (13,17) au moins en partie par rapport au dispositif transporteur, de telle sorte qu'une position d'enroulement (figure 3), plus proche du dispositif transporteur, et une position d'éjection (figure 4), plus éloignée de ce dispositif, soient déterminées pour les cylindres d'enroulement (3a,3b,3c,3d).

8. Dispositif selon la revendication 7, caractérisé en ce que le dispositif de commande de réglage comporte un ou plusieurs organes d'entraînement du type à excentrique (22,23), qui attaquent, respectivement par l'intermédiaire d'une tige accouplée (26), le support de réglage (5) ou l'une de ses parties (21,22a).

9. Dispositif selon la revendication 7 ou 8, caractérisé en ce que le support de réglage (5) est articulé de manière à pouvoir pivoter, en totalité ou en partie (20,21,22a,23a), sur le châssis de base (1) du dispositif.

10. Dispositif selon les revendications 9 et 2, caractérisé par une articulation du support de réglage (5) autour de l'axe longitudinal (12a) de l'un des cylindres d'enroulement supérieurs (3a), de telle sorte que le cylindre d'enroulement le plus bas (3c) puisse être réglé dans une position d'enroulement (figure 3), plus proche du dispositif transporteur, et une position d'éjection (figure 4) plus éloignée.

11. Dispositif selon l'une des revendications 7 à 10, caractérisé en ce que le support de réglage (5) possède au moins deux moyens formant palier (21,23a) déplaçables séparément l'un de l'autre et auxquels sont associés des cylindres d'enroulement différents (3a,3b;3c) et des organes d'entraînement respectifs (22;23), pouvant être actionnés séparément, du dispositif de commande de réglage.

12. Dispositif selon l'une des revendications précédentes, caractérisé par un ou plusieurs renfoncements de guidage de forme annulaire (28) aménagés dans l'enveloppe extérieure du cylindre d'enroulement (3a,3b,3c,3d).
